# EUROPEAN PATENT SPECIFICATION

(11) **EP 2 538 585 B1**
(45) Date of publication and mention of the grant of the patent: **06.05.2015**
(21) Application number: 11305771.5
(22) Date of filing: 20.06.2011
(51) Int. Cl.: H04W 88/08

(54) **Apparatuses, methods and computer programs for a remote unit and for a central unit of a base station transceiver**
Vorrichtungen, Verfahren und Computerprogramme für eine Fernenheit und für eine Zentraleinheit eines Basisstations-Senders/Empfängers
Appareils, procédés et programmes informatiques pour une unité distante et pour une unité centrale d'un émetteur/récepteur de station de base

(43) Date of publication of application: 26.12.2012
(73) Proprietor: ALCATEL LUCENT, 92100 Boulogne-Billancourt (FR)
(72) Inventor: Haslach, Christoph, 70178 Stuttgart (DE); Frotzscher, Andreas, 70435 Stuttgart (DE); Markert, Daniel, 70435 Stuttgart (DE); Maier, Simone, 70565 Stuttgart (DE); Kuebart, Wolfgang, 70193 Stuttgart (DE)
(74) Representative: Knecht, Ulrich Karl

(56) References cited:
- EP-A1- 0 741 218
- EP-A1- 2 234 454
- AU-A1- 2009 201 717
- GB-A- 2 440 192
- US-A1- 2009 232 191
- 'CPRI Specification V4.2 (2010-09-29) Interface Specification Common Public Radio Interface (CPRI); Interface Specification' 29 September 2010, XP055018382

## Description

Embodiments of the present invention relate to communication networks, more particularly but not exclusively to packet data transmission in mobile communication networks.

### Background

Demands for higher data rates for mobile services are steadily increasing. At the same time modern mobile communication systems as 3rd Generation systems (3G as abbreviation) and 4th Generation systems (4G as abbreviation) provide enhanced technologies which enable higher spectral efficiencies and allow for higher data rates and cell capacities. The mobile communication infrastructure becomes more and more dense. The conventional base station transceiver in wireless communication systems like the Universal Mobile Telecommunication System (UMTS) and Long Term Evolution (LTE) system can be split in two separate units, a Remote Unit (RU) and a Central Unit (CU), connected either by electrical or optical links. This concept is well known and can be found in the product lineup of infrastructure suppliers.

The RU comprises a Radio Frequency (RF) frontend, i.e. analog transmit and receive RF components. For the UpLink (UL) path the RU comprises a receive antenna, which can be reused as transmit antenna for the DownLink (DL) signals. Moreover, in the uplink path the RU comprises filters corresponding to the uplink bandwidth and frequency as well as a Low Noise Amplifier (LNA). In the downlink path, the respective downlink filters are comprised together with a Power Amplifier (PA) and a transmit antenna, which can be identical with the receive antenna of the uplink path. The central unit supplies the Intermediate Frequency (IF) and/or the RF and/or the base band signal processing. Low delay times and high data rates are desirable for the data exchange between the RU and the CU to assure proper service quality, particularly when taking into account the multiple RUs may be connected to a single CU.

Document AU2009 201 717 A1 discloses a module for transforming between an RF signal and a digital multiplexed optical signal, the RF signal comprising a plurality of RF signal components. The module comprises a plurality of guides for guiding the RF components, at least two of the RF signal components including different frequency ranges. The module further comprises a converter being arranged to convert between the RF signal components and a plurality of digital signal components and being arranged to convert between the plurality of digital signal components and a multiplexed optical digital signal. The module further comprises an optical light guide for guiding the digital multiplexed optical signal.

### Summary

Embodiments are based on the finding that the usage of an optical fiber leads to way less power losses in DL-Tx direction and smaller deterioration of reference sensitivity in UL-Rx direction as in a conventional base station (BS) setup with high power RF-cable. Therefore a longer distance can be established between RU and CU.

Furthermore, embodiments can be based on the finding that an installation of optical fibers is simpler compared to an antenna cable. Moreover, the overall complexity can be reduced since the resource management and the signal generation for several RUs can be done in one CU. Additionally, lower costs may result due to shared use of components at the CU between several RUs and due to simplified maintenance of the less complex RUs. Embodiments can be further based on the finding that an optical link offers enough, bandwidth for several RUs and so only the CU needs to be upgraded for higher data rates if desired.

Embodiments are based on the finding that it is desirable to receive a desired uplink signal and to forward this signal to a BS cabinet while fulfilling signal reception requirements of a target wireless communication standard. For example, in the uplink direction the received RF signal can be filtered to separate it from the downlink signal and other disturbing signals, it can then be amplified by a low noise amplifier (LNA) and then be converted down to an intermediate frequency. Analog/Digital (A/D) conversion can then be done directly at the RU before an Electrical/Optical (E/O) conversion for the fiber link is carried out. Embodiments are further based on the finding that this approach can result in a high complexity at the RU and in high costs for the system upgrade, as the conversion to the IF may result in extended hardware for generation or supply of the according mixer signals. Moreover, embodiments can be based on the finding that the optical signal becomes more and more distorted as the fiber gets longer, i.e. as the distance between CU and RU extends.

Moreover, in the downlink-direction, the digital samples can be transmitted digitally over the optical fiber. At the RU, the RF signal can be generated by processing baseband samples. For example, the Common Public Radio Interface (CPRI) according to the specifications of the 3rd Generation Partnership Project (3GPP) can be used. In other words, a CPRI-frame may be received and processed at the RU before it is Digital/Analog (D/A) converted, converted to the RF frequency and power amplified. In uplink direction the received RF signal can be separated from the downlink signal by a duplex filter, then amplified by a low noise amplifier and converted down. After AD conversion it can be framed to a CPRI compliant signal and transmitted over the optical fiber to the base station. Embodiments can be further based on the finding that an increased complexity is needed near the antenna location, e.g. on an antenna mast.

Furthermore, as the RU can be connected to the CU via a fiber-optic link the received signal may be used to directly modulate a laser, the modulated light can then be converted to an electrical signal at the CU again. Embodiments are further based on the finding that especially for directly modulated lasers the limited linearity of an analog Radio over Fiber (RoF) link, temperature drifts, aging etc. can cause severe distortions to the optical signal additional to the Relative Intensity Noise (RIN), which may limit the use of RoF over large distances. Furthermore, high costs may result due to required high linearity of E/O-Optical/Electrical (O/E) link components.

Embodiments therefore provide an apparatus for a remote unit of a base station transceiver in a mobile communication system, i.e. embodiments may provide said apparatus to be operated by or included in a remote unit. In the following, the apparatus will also be referred to as remote unit apparatus. The mobile communication system may, for example, correspond to one of the 3GPP-standardized mobile communication networks, as e.g. Long Term Evolution (LTE), an LTE-Advanced (LTE-A), a Universal Mobile Telecommunication System (UMTS) or a UMTS Terrestrial Radio Access network (UTRAN), an Evolved-UTRAN (E-UTRAN), a Global System for Mobile Communication (GSM) or Enhanced Data Rates for GSM Evolution (EDGE) network, a GSM/EDGE Radio Access Network (GERAN), generally an Orthogonal Frequency Division Multiple Access (OFD-MA) network, etc., or mobile communication networks with different standards, e.g. Worldwide Interoperability for Microwave Access (WIMAX).

In the following the base station transceiver is assumed to comprise or to be composed of a central unit and the remote unit, where the central unit and the remote unit can be separated and can be interconnected by fiber optics. The remote unit comprises means for obtaining an uplink receive signal, comprising a low noise amplifier for amplifying a filtered radio signal from a receive antenna and a mixer for down converting the signal from the low noise amplifier to a base band frequency to obtain the uplink receive signal, wherein the uplink receive signal comprises analogue inphase and quadrature components at a baseband frequency.

In other words, an uplink receive signal is referred to as a signal received at a receive antenna and which can be, but is not necessarily further processed, as, for example, by means of one or more filters, mixers, LNAs etc. Moreover, the apparatus comprises means for modulating the uplink receive signal into a modulated signal, the modulated signal changing between at least two signal levels. More generally spoken, embodiments may use different amplitude or signal levels for modulating. The means for modulating can be adapted to distinguish between N distinct signal levels (N = 2, 3, ..., N equals a positive integer). The modulated signal can comprise rising and falling edges between the at least two signal levels, wherein a time and/or a signal level between the rising and falling edges signals information on the uplink receive signal. Furthermore, the apparatus comprises means for providing the modulated signal to the central unit.

The apparatus further comprises a low noise amplifier for amplifying a filtered radio signal from a receive antenna to obtain the uplink receive signal. In other words, the radio signals in the uplink may be received by the receive antenna and separated from other signals, i.e. interference from downlink signals, by a duplexer or system filter. Such a filter may as well correspond to a band pass filter. The filtered signal may then be amplified by an LNA and the amplified signal may correspond to the above uplink receive signal. Further the uplink receive signal comprises analogue inphase and quadrature components at a baseband frequency.

A mixer is adapted for down converting the signal from the low noise amplifier to a base band frequency to obtain the uplink receive signal. In a further embodiment the mixer can then be adapted to down-convert the signal from the low noise amplifier based on the mixer signal. The apparatus may then further comprise means for generating the mixer signal locally and/or means for receiving the mixer signal from the central unit similar to what is described for the mixer signal for down converting the signal from the LNA to the intermediate frequency band. Thus in embodiments the apparatus can comprise means for receiving an optical mixer signal from the central unit and the means for receiving can be further adapted for converting the optical mixer signal into an electrical mixer signal for provision to the mixer. The down converted signal may be further filtered for removal of undesired signal parts after down converting. When down converting to the base band the uplink receive signal in base band may correspond to a complex valued signal. The mixer can then be adapted to down convert based on the mixer signal and a shifted version of the mixer signal. A phase shift between the mixer signal and the shifted version of the mixer signal may correspond to 90°degrees or π/2.

In a further embodiment when down converting to the base band the uplink receive signal in base band may correspond to two real valued signals.

In other words, the modulated signal may, in some embodiments, be a binary signal comprising a first amplitude, representing a first binary value and a second amplitude, representing a second binary value. The means for modulating can be adapted to adjust the time between a first edge of the modulated signal and a subsequent second edge of the modulated signal such that the time represents a level of the uplink receive signal. The means for modulating can be adapted to modulate the uplink receive signal corresponding to an on-off-keying signal or an amplitude-shift keying to obtain the modulated signal, which can be binary in some embodiments and which can be N-ary (N is positive integer) in other embodiments. In embodiments the means for modulating can be adapted to modulate the uplink receive signal, e.g. according to a pulse-width modulation or according to a delta-sigma modulation.

The means for modulating may be adapted to convert the uplink receive signal further based on a tunable clock signal or a reference signal. The apparatus can further comprise means for generating the tunable clock signal or the reference signal. The apparatus may comprise means for receiving the tunable clock signal or the reference signal from the central unit. In other words; in embodiments wherein the means for modulating uses a delta-sigma modulation a tunable clock signal for the delta-sigma-modulation may be generated locally by the remote unit apparatus. In other embodiments, the tunable clock signal may be generated at the central unit and then transferred, e.g. using an optical link, to the remote unit. In such an embodiment the apparatus may convert the tunable optical clock signal to an electrical signal before the tunable electrical clock signal is used for delta-sigma-modulating. In other embodiments, in which the means for modulating uses a pulse-width modulation, a reference signal for the pulse-width-modulation may be generated locally by the remote unit apparatus. In other embodiments, the reference signal may be generated at the central unit and then transferred, e.g. using an optical link, to the remote unit. In such an embodiment the apparatus may convert the optical reference signal to an electrical signal before the tunable electrical clock signal is used for delta-sigma-modulating or pulse width modulation.

In further embodiments the apparatus can further comprise a mixer for down converting the signal from the LNA to an intermediate frequency to obtain the uplink receive signal. In other words, while the above embodiments may modulate the uplink receive signal in the transmission band, further embodiments may modulate the uplink receive signal in an intermediate frequency band. In such embodiments a mixer can be comprised in the remote unit apparatus, which can be adapted to down-convert the signal from the LNA based on a mixer signal. The apparatus can further comprise means for generating the mixer signal and/or means for receiving the mixer signal from the central unit. In other words, in embodiments, wherein the apparatus comprises a mixer for down converting the signal from the LNA to the intermediate frequency band, a corresponding mixer signal for the mixer may be generated locally by the remote unit apparatus.

In other embodiments, the mixer signal may be generated at the central unit and then transferred, e.g. using an optical link, to the remote unit. In such an embodiment the apparatus may convert the optical mixer signal to an electrical signal before the electrical mixer signal is used for converting. In other embodiments, in which the apparatus comprises a mixer, the mixer signal for down converting the signal from the LNA may be generated locally by the remote unit apparatus. The down converted signal may then be further filtered to remove undesired signal parts after converting.

In embodiments, the means for providing can be further adapted for converting the modulated signal to an optical modulated signal for provision to the central unit. In other words, the modulated signal may be used to further modulate an optical signal, which may then be provided to the central unit via an optical link.

Moreover, embodiments provide an apparatus for the central unit of the base station transceiver in the mobile communication system, i.e. embodiments may provide said apparatus to be operated by or included in a central unit. In the following, the apparatus will also be referred to as central unit apparatus. The central unit apparatus comprises means for receiving the modulated signal from the remote unit. Furthermore, the central unit apparatus comprises means for demodulating the modulated signal into an uplink receive signal. The modulated signal changes between at least two signal levels and the modulated signal comprises rising and falling edges between the at least two signal levels. The time between the rising and falling edges signals information on the uplink receive signal, wherein the uplink receive signal comprises analogue inphase and quadrature components at a baseband frequency. The apparatus further comprises an analog-digital converter for digitizing the uplink receive signal. In embodiments binary or N-ary modulation schemes can be used. In the case of N-ary signals the time between the rising and falling edges and/or the signal level itself signal information on the uplink receive signal.

In line with the above description of embodiments of the remote unit apparatus the means for demodulating of the central unit apparatus can be adapted to adjust a signal level of the uplink receive signal based on the time between a first edge of the modulated signal and a subsequent second edge and/or the level of the modulated signal. The means for demodulating can be adapted to demodulate the uplink receive signal corresponding to an on-off-keying modulation or an amplitude-shift keying modulation of the modulated signal. Moreover, the means for demodulating can be adapted to demodulate the modulated signal according to a pulse-width demodulation or according to a delta-sigma demodulation. The central unit apparatus may comprise the means for receiving, which is further adapted for converting a received optical modulated signal to the modulated (electrical) signal.

Embodiments may further provide a base station transceiver comprising the above described remote unit apparatus and/or the above described central unit apparatus.

Embodiments further provide the above methods for the remote unit and for the central unit. Embodiments provide a method for the remote unit of the base station transceiver in the mobile communication-system, the base station transceiver comprises the central unit and the remote unit. The method comprises a step of obtaining an uplink receive signal, comprising amplifying a filtered radio signal from a receive antenna and a down converting the signal to a base band frequency to obtain the uplink receive signal, wherein the uplink receive signal comprises analogue inphase and quadrature components at a base-band frequency. The method further comprises a step of modulating the uplink receive signal into a modulated signal, the modulated signal changing between at least two signal levels, the modulated signal comprising rising and falling edges between the at least two signal levels, wherein a time between the rising and falling edges comprises information on the uplink receive signal. The method further comprises a step of providing the modulated signal to the central unit.

Furthermore, embodiments may provide a method for the central unit of the base station transceiver in the mobile communication system. The method comprises a step of receiving a modulated signal from the remote unit and a step of demodulating the modulated signal into an uplink receive signal, the modulated signal changing between at least two signal levels, the modulated signal comprising rising and falling edges between the at least two signal levels, wherein a time between the rising and falling edges comprises information on the uplink receive signal, wherein the uplink receive signal comprises analogue inphase and quadrature components at a baseband frequency. The method further comprising analog-digital converting for digitizing the uplink receive signal.

Moreover, embodiments provide computer programs having a program code for performing one of the above described methods, when the computer program is executed on a computer or processor.

### Brief description of the Figures

Some other features or aspects will be described using the following non-limiting embodiments of apparatuses and/or methods and/or computer programs by way of example only, and with reference to the accompanying figures, in which
- Figure 1: depicts a block diagram of an embodiment of an apparatus for a remote unit and a block diagram of an embodiment of an apparatus for a central unit of a base station transceiver;
- Figure 2a: shows a block diagram of another embodiment of an apparatus for a remote unit and a block diagram of another embodiment of an apparatus for a central unit;
- Figure 2b: shows a block diagram of another embodiment of an apparatus for a remote unit and a block diagram of another embodiment of an apparatus for a central unit;
- Figure 3a: shows a block diagram of another embodiment of an apparatus for a remote unit and a block diagram of another embodiment of an apparatus for a central unit;
- Figure 3b: shows a block diagram of another embodiment of an apparatus for a remote unit and a block diagram of another embodiment of an apparatus for a central unit;
- Figure 4: shows a block diagram of yet another embodiment of an apparatus for a remote unit and a block diagram of another embodiment of an apparatus for a central unit;
- Figure 5: shows a flow chart of an embodiment of a method for a remote unit; and

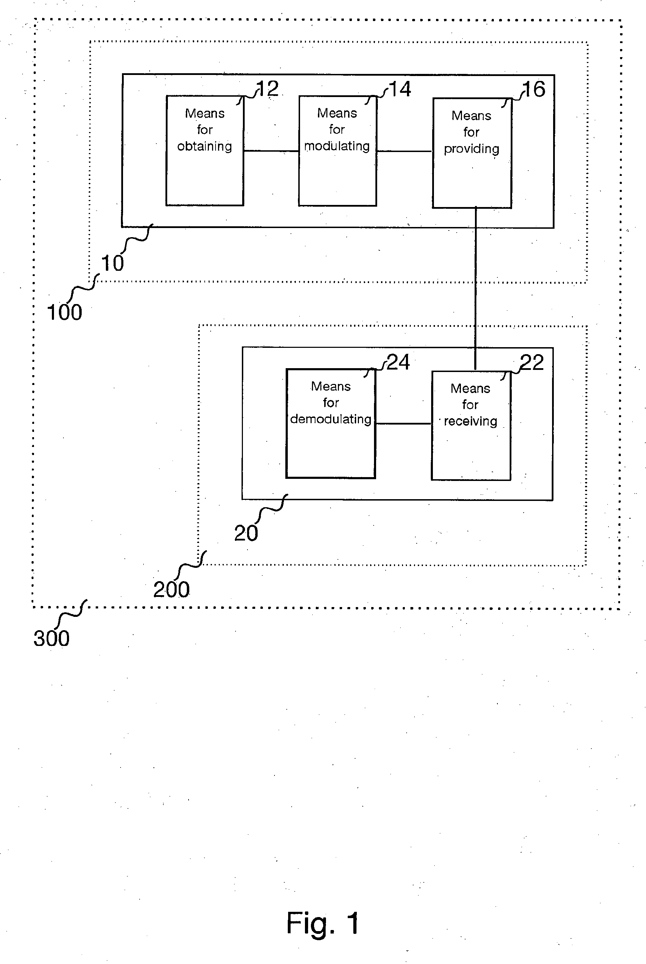

In the embodiment of Figure 1, the means for modulating 14 of the remote unit apparatus 10 is adapted to adjust the time between a first edge of the modulated signal and a subsequent second edge of the modulated signal such that the time and/or level represent a level of the uplink receive signal. The means for modulating 14 can be adapted to modulate the uplink receive signal corresponding to an on-off-keying signal or to an amplitude-shift-keying signal to obtain the modulated signal. The means for modulating 14 is adapted to modulate the uplink receive signal according to a pulse-width modulation or according to a delta-sigma modulation.

In line with the embodiment of the remote unit apparatus 10, in the embodiment of the central unit apparatus 20 the means for demodulating 24 is adapted to adjust a signal level of the uplink receive signal based on the time between a first edge of the modulated signal and a subsequent second edge and the level of the modulated signal. The means for demodulating 24 can be adapted to demodulate the uplink receive signal corresponding to an on-off-keying modulation or corresponding to an amplitude-shift-keying modulation of the modulated signal. The means for demodulating 24 can be adapted to demodulate the modulated signal according to a pulse-width demodulation or according to a delta-sigma demodulation.

In the following, the embodiments will also be referred to as class-O systems, indicating optical signal transmission between the remote unit 100 and the central unit 200 with usage of delta sigma modulation or pulse-width modulation. Thus in the embodiment, the means for providing 16 of the remote unit apparatus 10 is further adapted for converting the modulated signal to an optical modulated signal for provision to the central unit 200. The central unit apparatus 20 comprises the means for receiving 22, which is further adapted for converting a received optical modulated signal to the modulated (electrical) signal.

The embodiment illustrated in Figure 1 uses an encoder or modulator 14, i.e. Delta-Sigma-Modulator (DSM) or Pulse-Width-Modulator (PWM), instead of using an analogue signal or a CPRI interface with conventional Nyquist A/D conversion, on the optical link of the Class-O Uplink. Moreover, the apparatus 10 in Figure 1 may modulate or convert the received RF signal, i.e. the uplink receive signal, directly into a discrete signal, i.e. the modulated signal, which is transmitted, through the means for providing 16, on the optical link to the central unit 200. The apparatus 10 can further comprise a low noise amplifier 12b for amplifying a filtered radio signal from a receive antenna 30 to obtain the uplink receive signal.

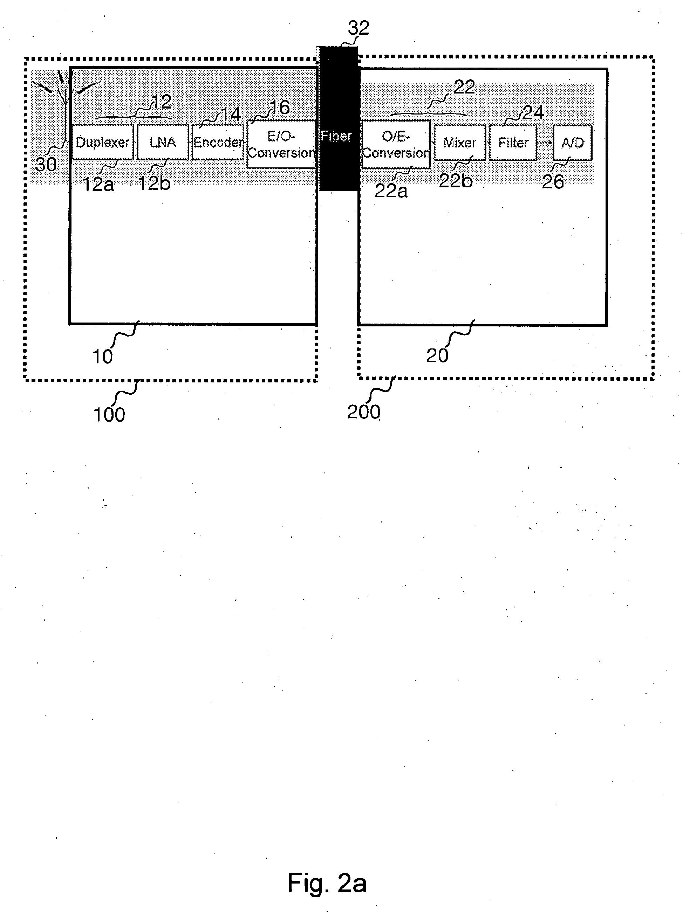

Figure 2a shows block diagram of another embodiment of an apparatus 10 for a remote unit 100 and a block diagram of another embodiment of an apparatus 20 for a central unit 200. In the embodiment of the remote unit apparatus 10 in Figure 2a, the means for obtaining 12 is implemented as a duplexer 12a, which receives an RF signal from the receive antenna 30, and an LNA 12b. The means for modulating 14 is implemented as an encoder carrying out DSM or PWM on the signal provided by LNA 12b. The means for providing 16 is implemented as E/O converter 16 for converting the modulated electrical signal provided by the encoder 14 to an optical modulated signal.

The optical modulated signal is then provided through a fiber 32 to the central unit 200 with the central unit apparatus 20. In the embodiment the means for receiving 22 is implemented as an O/E converter 22a, which converts the modulated optical signal to the modulated electrical signal, and a mixer 22b. The means for demodulating 24 is implemented as a filter, more specifically as a low pass or IF filter. For example, when the modulated signal is DSM modulated it may be demodulated by low pass or IF filtering. In the embodiment the central unit apparatus 20 further comprises an A/D converter 26 for converting or digitizing the uplink receive signal provided by the filter 24.

The means for modulating 14 can be adapted to convert the uplink receive signal further based on a tunable clock signal or a reference signal. The apparatus 10 can further comprise means for generating the tunable clock signal or the reference signal or the apparatus 10 can further comprise means for receiving the tunable clock signal or the reference signal from the central unit 200.

In other words, in the embodiment depicted in Figure 2a there is an encoder 14 modulating or encoding directly on the RF frequency. The received analogue signal at the remote unit 100 may be filtered by a system filter 12a (Duplexer) and it is amplified by a low noise amplifier 12b (LNA) to a suitable level for an input signal into the encoder 14. The additionally needed tunable clock signal (in case of DSM) or reference signal (in case of PWM) for the encoder 14 is either generated in the remote unit 100, i.e. based on the transmitted downlink signal or based on the received uplink signal, or it is generated in the central unit 200 and is then supplied to the remote unit 100 via an additional optical link, using a separate band or wavelength, respectively. The digitized electrical output signal of the encoder 14 is then converted to an optical signal 16 and transmitted via the optical link 32 to the central unit 200. After O/E-conversion 22a it is converted down to IF or BB 22b and is then filtered 24 (fixed/tunable filter) before A/D-conversion 26 and subsequent evaluation.

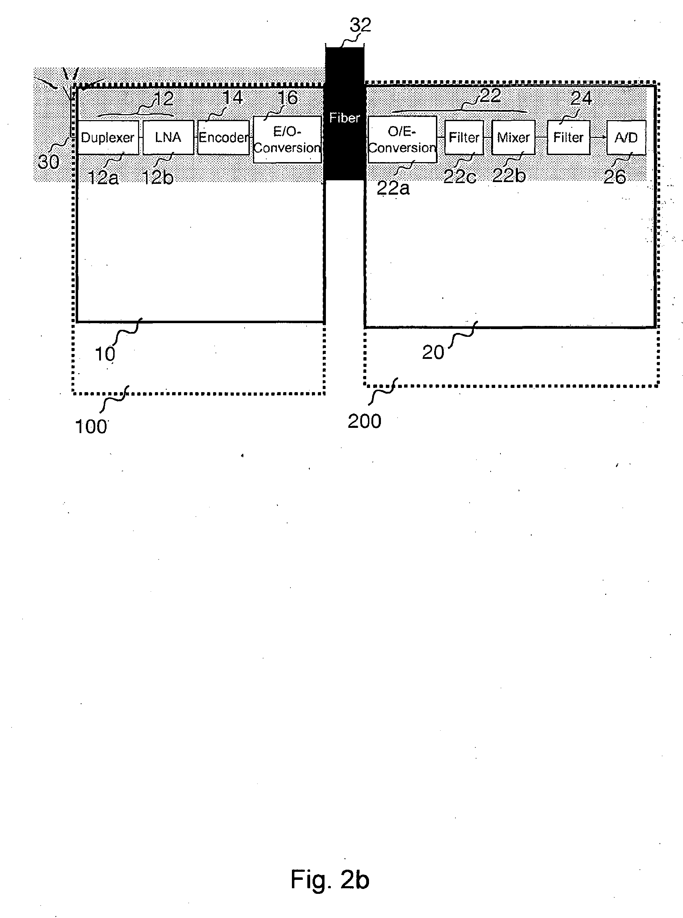

Figure 2b shows a block diagram of another embodiment of an apparatus 10 for a remote unit 100 together with a block diagram of another embodiment of an apparatus 20 for a central unit 200. In the embodiment of the remote unit apparatus 10 in Figure 2b, the means for obtaining 12 is implemented as a duplexer 12a, which receives an RF signal from the receive antenna 30, and an LNA 12b. The means for modulating 14 is implemented as an encoder 14 carrying out DSM or PWM on the signal provided by LNA 12b. The means for providing 16 is implemented as E/O converter 16 for converting the modulated electrical signal provided by the encoder 14 to an optical modulated signal.

The optical modulated signal is then provided through a fiber 32 to the central unit 200 with the central unit apparatus 20. In the embodiment the means for receiving 22 is implemented as an O/E converter 22a, which converts the modulated optical signal to the modulated electrical signal, which is filtered by a filter 22c and provided to a mixer 22b. The means for demodulating 24 is implemented as a filter, more specifically as a low pass or IF filter. For example, when the modulated signal is DSM modulated it may be demodulated by low pass or IF filtering. In the embodiment the central unit apparatus 20 further comprises an A/D converter 26 for converting or digitizing the uplink receive signal provided by the filter 24. In other words, the embodiment of Figure 2b is similar to the embodiment of Figure 2a, except for an additional filter 22c, which filters the O/E converted signal before down conversion in the mixer 22b. For example, signal parts, which result from distortion or noise which occur during transmission through the fiber 32.

In line with what was described above with respect to Figure 2a and the embodiments shown therein, the means for modulating 14 can be adapted to convert the uplink receive signal further based on a tunable clock signal or a reference signal. The apparatus 10 can further comprise means for generating the tunable clock signal or the reference signal or the apparatus 10 can further comprise means for receiving the tunable clock signal or the reference signal from the central unit 200.

In other words, in the embodiment depicted in Figure 2b there is an encoder 14 modulating or encoding directly on the RF frequency. The received analogue signal at the remote unit 100 may be filtered by a system filter 12a (Duplexer) and it is amplified by a low noise amplifier 12b (LNA) to a suitable level for an input signal into the encoder 14. The additionally needed tunable clock signal (in case of DSM) or reference signal (in case of PWM) for the encoder 14 is either generated in the remote unit 100, i.e. based on the transmitted downlink signal or based on the received uplink signal, or it is generated in the central unit 200 and is then supplied to the remote unit 100 via an additional optical link, using a separate band or wavelength, respectively. The digitized electrical output signal of the encoder 14 is then converted to an optical signal 16 and transmitted via the optical link 32 to the central unit 200. After O/E-conversion 22a it is filtered 22c and converted down to IF or BB 22b, it is then filtered 24 (fixed/tunable filter) before A/D-conversion 26 and subsequent evaluation.

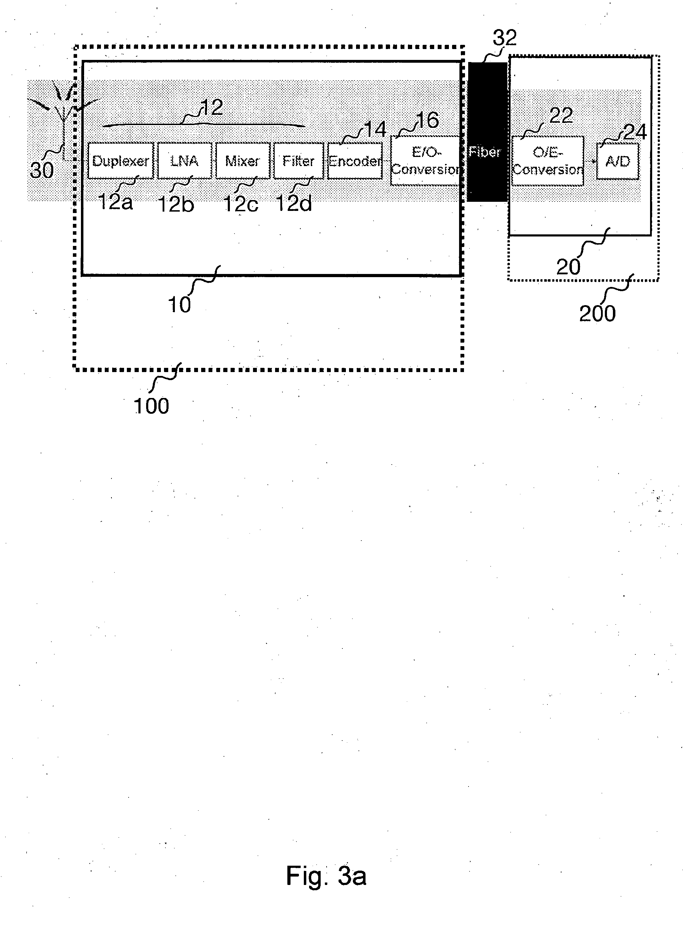

Figure 3a illustrates a block diagram of another embodiment of an apparatus 10 for a remote unit 100 and a block diagram of another embodiment of an apparatus 20 for a central unit 200. Some of the components are similar to the components described with respect to the preceding Figures, here and in the following similar components are referenced with similar reference signs. In the embodiment depicted in Figure 3a the means for obtaining 12 is implemented as a duplexer 12a, which receives an RF signal form the receive antenna 30, an LNA 12b, and a mixer 12c. The LNA 12b amplifies the radio signal, which is received by the receive antenna 30 and filtered by the duplexer 12a. The mixer 12c down converts the signal from the LNA 12b to an intermediate frequency, where the down converted signal can be optionally filtered by filter 12d. In embodiments, the means for obtaining 12 may further comprise a filter 12d to filter the down converted signal to obtain the uplink receive signal. In the embodiment of Figure 3a the filter 12d is adapted to remove undesired signal parts generated by the mixer 12c (e.g. mirror frequency signals).

The mixer 12c can be adapted to down-convert the signal from the low noise amplifier 12b based on a mixer signal, and hence the apparatus 10 may further comprise means for generating the mixer signal and/or means for receiving the mixer signal from the central unit 200. The apparatus 10 can further comprise means for receiving an optical mixer signal from the central unit 200, wherein the means for receiving can be further adapted for converting the optical mixer signal into an electrical mixer signal for provision to the mixer 12c. In line with Figure 3a, the apparatus 10 further comprises an encoder 14, e.g. DSM or PWM as implementation of the means for modulating 14, and an E/O-converter 16, as implementation of the means for providing 16, similar to what is described above with respect to Figures 2a and 2b. The optical signal is then transmitted using the fiber 32.

Figure 3a further illustrates a block diagram of another embodiment of an apparatus 20 of a central unit 200. In this embodiment the apparatus 20 comprises an O/E converter 22 for receiving an optical signal from the fiber 32, as implementation of the means for receiving 22, and an A/D converter 24 as implementation for the means for demodulating 24.

In the embodiment of Figure 3a encoding 14 is carried out on an IF frequency. Therefore, after O/E 22 conversion the electrical signal can be directly A/D converted as well. The received analogue signal at the remote unit 100 may be filtered by a system filter 12a (Duplexer) and it can be amplified by a low noise amplifier (LNA 12b) to a suitable level for the mixer 12c. It is converted down to IF before it is filtered 12d. The filter 12d may be fixed or tunable. This analogue signal is the input signal for the encoder 14. The additionally needed clock signal (in case of DSM) or reference signal (in case of PWM) for the encoder 14 along with the LO signal for the mixer 12c and the control signal for the filter 12d (all maybe tunable) are either generated in the remote unit 100, i.e. based on the transmitted downlink signal or based on the received uplink signal, or they are generated in the central unit 200 and are then supplied to the remote unit 100 via an additional optical link. The digitized electrical output signal of the encoder 14 is then converted to an optical signal and transmitted via the optical link 32 to the central unit 200. After O/E-conversion 22 it might be filtered again (fixed/tunable filter) before A/D-conversion 24 and subsequent evaluation.

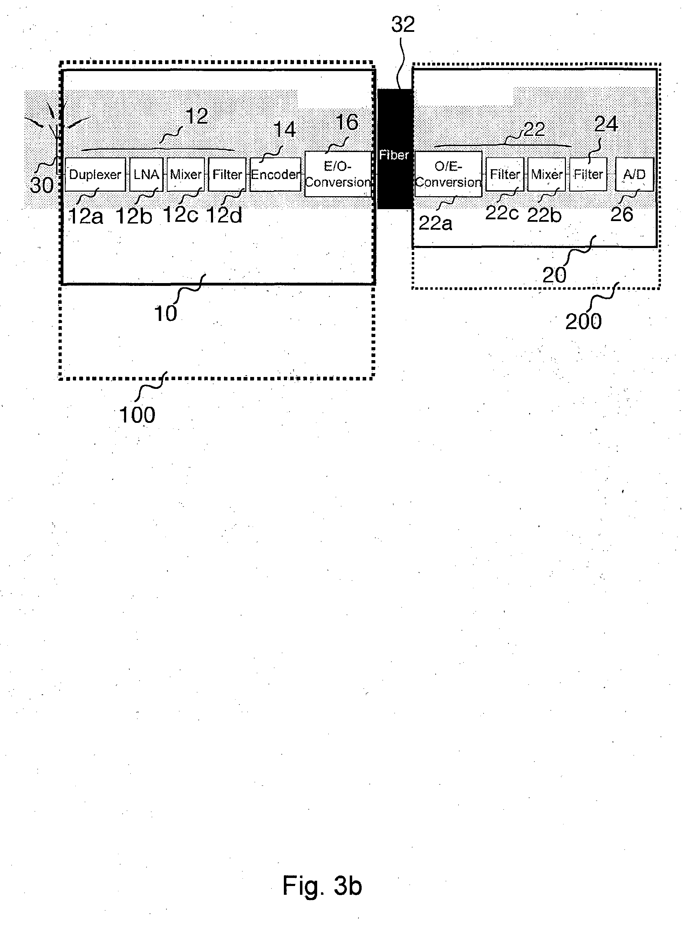

In further embodiments a down conversion to the base band of the analogue signals can be carried out at the central unit apparatus 20 before subsequent A/D conversion and further processing. Figure 3b shows a block diagram of another embodiment of an apparatus 10 for a remote unit 100 and a block diagram of another embodiment of an apparatus 20 for a central unit 300. As can be seen from Figure 3b the remote unit 100 comprises similar components as in Figure 3a. The means for obtaining 12 is implemented as a duplexer 12a, which receives an RF signal from the receive antenna 30, an LNA 12b, and a mixer 12c.

The LNA 12b amplifies the radio signal, which is received by the receive antenna 30 and filtered by the duplexer 12a. The mixer 12c down converts the signal from the LNA 12b to an intermediate frequency, where the down converted signal can be optionally filtered by filter 12d. In embodiments, the means for obtaining 12 may further comprise a filter 12d to filter the down converted signal to obtain the uplink receive signal. In the embodiment of Figure 3b the filter 12d is again adapted to remove undesired signal parts generated by the mixer 12c (e.g. mirror frequency signals).

The mixer 12c can be adapted to down convert the signal from the low noise amplifier 12b based on a mixer signal, and hence the apparatus 10 may further comprise means for generating the mixer signal and/or means for receiving the mixer signal from the central unit 200. The apparatus 10 can further comprise means for receiving an optical mixer signal from the central unit 200, wherein the means for receiving can be further adapted for converting the optical mixer signal into an electrical mixer signal for provision to the mixer 12c. In line with Figures 3a and 3b, the apparatus 10 further comprises an encoder 14, e.g. DSM or PWM as implementation of the means for modulating 14, and an E/O-converter 16, as implementation of the means for providing 16, similar to what is described above with respect to Figures 2a and 2b. The optical signal is then transmitted using the fiber 32.

Figure 3b further illustrates a block diagram of another embodiment of an apparatus 20 of a central unit 200, which is similar to the apparatus 20 of the embodiment depicted in Figure 2b. In the embodiment of Figure 3b it is assumed that the signal received through the fiber 32 is down converted from the IF to the base band by the mixer 2b. The optical modulated signal is then provided through a fiber 32 to the central unit 200 with the central unit apparatus 20. In the embodiment the means for receiving 22 is implemented as an O/E converter 22a, which converts the modulated optical signal to the modulated electrical signal, which is filtered by a filter 22c and provided to a mixer 22b. The means for demodulating 24 is implemented as a filter 24, more specifically as a low pass filter. For example, when the modulated signal is DSM modulated it may be demodulated by low pass filtering. In the embodiment the central unit apparatus 20 further comprises an A/D converter 26 for converting or digitizing the uplink receive signal provided by the filter 24. In other words, the embodiment of Figure 3b is similar to the embodiment of Figure 2a, except for an additional filter 22c, which filters the O/E converted signal before down conversion in the mixer 22b. For example, signal parts which result from distortion or noise which occur during transmission through the fiber 32.

In the embodiment of Figure 3b encoding 14 is carried out on an IF frequency. Therefore, after O/E 22 conversion the electrical signal can be filtered 22c and down converted from the IF to the base band 22b. After down conversion the signal can be directly A/D converted as well. The received analogue signal at the remote unit 100 may be filtered by a system filter 12a (Duplexer) and it can be amplified by a low noise amplifier (LNA 12b) to a suitable level for the mixer 12c. It is converted down to IF before it is filtered 12d. The filter 12d may be fixed or tunable. This analogue signal is the input signal for the encoder 14. The additionally needed clock signal (in case of DSM) or reference signal (in case of PWM) for the encoder 14 along with the LO signal for the mixer 12c and the control signal for the filter 12d (all maybe tunable) are either generated in the remote unit 100, i.e. based on the transmitted downlink signal or based on the received uplink signal, or they are generated in the central unit 200 and are then supplied to the remote unit 100 via an additional optical link. The digitized electrical output signal of the encoder 14 is then converted to an optical signal and transmitted via the optical link 32 to the central unit 200. After O/E-conversion 22 it might be filtered again (fixed/tunable filter) before A/D-conversion 24 and subsequent evaluation.

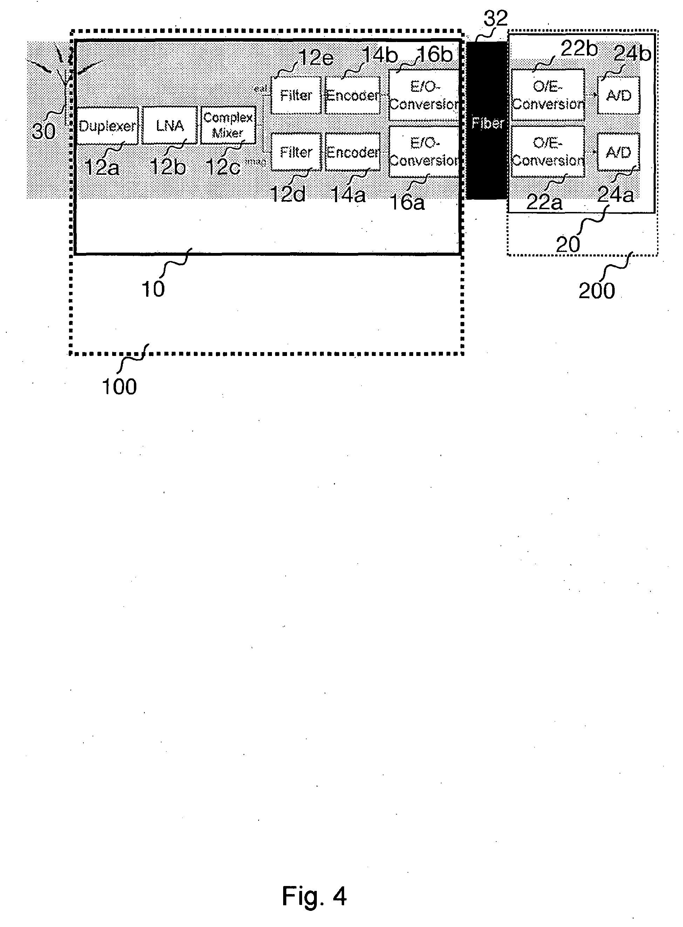

Figure 4 shows a block diagram of yet another embodiment of an apparatus 10 for a remote unit 100 and a block diagram of yet another embodiment of an apparatus 20 for a central unit 200. The remote unit apparatus 10 in Figure 4 comprises a receive antenna 30, a duplexer 12a and an LNA 12b, similar to what is described above. Moreover, the remote unit apparatus 10 comprises a complex valued mixer 12c for down converting the signal received from the LNA 12b to the complex valued base band. The low noise amplifier 12b amplifies the system filtered radio signal 12a from the receive antenna 30. The mixer 12c down-converts the signal from the low noise amplifier 12b to a base band frequency to obtain a complex base band signal, which can be processed further in separated processing branches. In each branch, i.e. the real and imaginary branches, there is a filter 12d, 12e for removing the undesired converting results and other undesired out-of-band distortions like blockers. Moreover, each branch has an encoder 14a, 14b, as implementation of the means for modulating 14, and an E/O converter 16a, 16b, as implementation of the means for providing 16.

After the filter 12d, 12e in the inphase (real values) and quadrature (imaginary values) branch, the uplink receive signal is obtained. The mixer 12c can be adapted to down-convert the signal from the low noise amplifier 12b based on a mixer signal. The remote unit apparatus 10 can further comprise means for generating the mixer signal and/or means for receiving the mixer signal from the central unit 200. Hence, the apparatus 10 may comprise means for receiving an optical mixer signal from the central unit 200, wherein the means for receiving is further adapted for converting the optical mixer signal into an electrical mixer signal for provision to the mixer 12c. In other words, the uplink receive signal can correspond to a complex valued signal. The mixer 12c can be adapted to down-convert based on the mixer signal and a shifted version of the mixer signal. The phase shift between the mixer signal and the shifted version of the mixer signal may correspond to 90°degrees or π/2.

As can be seen from the above embodiments and the respective figures, the means for providing 16 can be adapted for converting the modulated signal to an optical modulated signal for provision to the central unit 200.

Thus, some embodiments may encode 14a, 14b in the Base Band (BB). The received analogue signal at the remote unit 100 may be filtered by a system filter (Duplexer 12a) and it may be amplified by a low noise amplifier (LNA 12b) to a suitable level for the mixer 12c. Now it can be converted directly to the BB or to an intermediate frequency first. The down-conversion to BB can be complex, e. g. by one reference source applied with a 90° or π/2 phase shift to two mixers, thus two separate paths (inphase and quadrature phase) can be utilized from that point on. The signal may be filtered on the IF or at BB. The filter 12d, 12e may be fixed or tunable. Depending on the architecture of the encoder 14a, 14b the complex signal may be handled by one or two components. The electrical output signal of the encoder(s) 14a, 14b with discrete amplitude levels can then be converted to an optical signal 16a, 16b and transmitted via the optical link 32 to the central unit 200, for example using on-off-keying or amplitude-shift-keying. The transmission of the two digital signals can be realized by providing multiple paths: For example, by an additional fiber 32 or by Wavelength Division Multiplexing (WDM) or by polarity diversity, i.e. with both signals one one fiber with a rotation in polarization of 90° or π/2. After O/E-conversion by O/E converters 22a, 22b in the central unit 200, the signal might be filtered again (fixed/tunable filter) before A/D-conversion by A/D converters 24a, 24b and subsequent evaluation.

Embodiments may also provide a base station transceiver 300 comprising an embodiment of the above remote unit apparatus 10 and/or an embodiment of the above central unit apparatus 20.

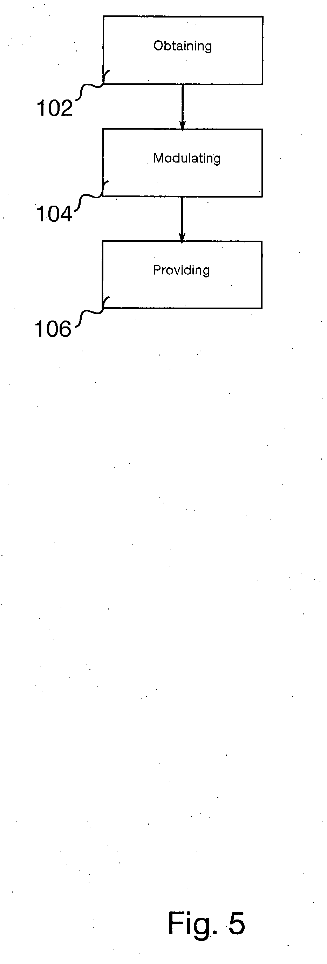

Figure 5 shows a flow chart of an embodiment of a method for a remote unit 100 of a base station transceiver 300 in a mobile communication system. The base station transceiver 300 comprises a central unit 200 and the remote unit 100. The method comprises a step of obtaining 102, an uplink receive signal. The method further comprises a step of modulating 104 the uplink receive signal into a modulated signal. The modulated signal changes between at least two signal levels and the modulated signal comprises rising and falling edges between the at least two signal levels. A time between the rising and falling edges and the level comprise information on the uplink receive signal. The method further comprises a step of providing 106 the modulated signal to the central unit 200.

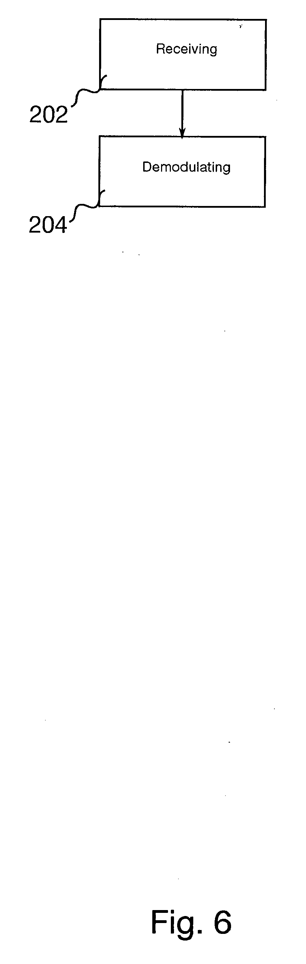

Figure 6 shows a flow chart of an embodiment of a method for a central unit 200 of a base station transceiver 300 in a mobile communication system. The base station transceiver 300 comprises the central unit 200 and a remote unit 100. The method comprises a step of receiving 202 a modulated signal from the remote unit 100 and a step of demodulating 204 the modulated signal into an uplink receive signal. The modulated signal changes between at least two signal levels and the modulated signal comprises rising and falling edges between the at least two signal levels. A time between the rising and falling edges and/or the signal level comprise information on the uplink receive signal.

Embodiments with binary encoding may provide the advantage that they may not suffer from nonlinearities and noise of the E/O-O/E link and therewith may allow the possible usage of low cost E/O and O/E components. Due to the more robust transmission the fiber-optic link can be longer and less transmission power can be used. Usual signal conditioning and restoration techniques for digital signals can be re-used easily. Furthermore, embodiments may utilize a comparably low complexity at the remote unit 100. Embodiments may be easily upgraded, since the optical link offers enough bandwidth only the BS cabinet may need to be upgraded. Moreover, embodiments may be protocol and bit-rate transparent.

Compared to conventional systems, embodiments use a discrete amplitude level signal and therewith enable a re-use of existing signal restoration techniques for digital signals, e.g. resampling, regeneration and therefore may improve the performance, e.g. longer fiber length possible, less power needed. Embodiments may therefore also provide the advantage that low cost fiber, E/O and O/E components may be used. Compared to the conventional solutions discrete components optimized for their special requirements may lead to a better overall performance than one combined device. Moreover, the complexity of the optical transmitter setup may be significantly reduced, data processing/decoding may be only carried out at the central unit 200 and increased flexibility may result because one would not have to comply on the CPRI or OBSAI or comparable formats.

Moreover, embodiments may provide a computer program having a program code for performing one of the above methods when the computer program is executed on a computer or processor.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for obtaining", "means for modulating", "means for providing", "means for generating", "means for receiving", "means for demodulating", etc., may be provided through the use of dedicated hardware, such as "an obtainer", "a modulator" "a provider", "a generator", "a receiver", "a demodulator", etc. as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. An apparatus (10) for a remote unit (100) of a base station transceiver (300) in a mobile communication system, the base station transceiver (300) comprising a central unit (200) and the remote unit (100), the remote unit apparatus (10) comprising
means for obtaining (12) an uplink receive signal comprising a low noise amplifier for amplifying a filtered radio signal from a receive antenna and a mixer for down converting the signal from the low noise amplifier to a base band frequency to obtain the uplink receive signal, wherein the uplink receive signals comprises analogue inphase and quadrature components at a baseband frequency;
means for modulating (14) the uplink receive signal into a modulated signal, the modulated signal changing between at least two signal levels, the modulated signal comprising rising and falling edges between the at least two signal levels, wherein a time between the rising and falling edges signals information on the uplink receive signal; and
means for providing (16) the modulated signal to the central unit (200).

2. The apparatus (10) of claim 1, wherein the means for modulating (14) is adapted to adjust the time between a first edge of the modulated signal and a subsequent second edge of the modulated signal such that the time represents a level of the uplink receive signal, wherein the means for modulating (14) is adapted to modulate the uplink receive signal corresponding to an on-off-keying or an amplitude-shift-keying signal to obtain the modulated signal; and/or wherein the means for modulating (14) is adapted to modulate the uplink receive signal according to a pulse-width modulation or according to a delta-sigma modulation.

3. The apparatus (10) of claim 1, wherein the means for modulating (14) is adapted to convert the uplink receive signal further based on a tunable clock signal or a reference signal, wherein the apparatus (10) further comprises means for generating the tunable clock signal or the reference signal or wherein the apparatus (10) further comprises means for receiving the tunable clock signal or the reference signal from the central unit (200).

4. The apparatus (10) of claim 1, wherein the uplink receive signal in the base band is represented by two real valued signals.

5. The apparatus (10) of claim 1, wherein the mixer is adapted to down-convert the signal from the low noise amplifier based on a mixer signal, wherein the apparatus (10) further comprises means for generating the mixer signal and/or means for receiving the mixer signal from the central unit (200) or wherein the uplink receive signal corresponds to a complex valued signal, and wherein the mixer is adapted to down-convert based on the mixer signal and a shifted version of the mixer signal, wherein a phase shift between the mixer signal and the shifted version of the mixer signal corresponds to 90°dedgrees or π/2.

6. The apparatus (10) of claim 5, wherein the apparatus (10) comprises means for receiving an optical mixer signal from the central unit (200), wherein the means for receiving is further adapted for converting the optical mixer signal into an electrical mixer signal for provision to the mixer (12c).

7. The apparatus (10) of claim 1, wherein the means for providing (16) is further adapted for converting the modulated signal to an optical modulated signal for provision to the central unit (200).

8. An apparatus (20) for a central unit (200) of a base station transceiver (300) in a mobile communication system, the base station transceiver (300) comprising the central unit (200) and a remote unit (100), the central unit apparatus (20) comprising
means for receiving (22) a modulated signal from the remote unit (100);
means for demodulating (24) the modulated signal into an uplink receive signal, the modulated signal changing between at least two signal levels, the modulated signal comprising rising and falling edges between the at least two signal levels, wherein a time between the rising and falling edges signals information on the uplink receive signal, wherein the uplink receive signal comprises analogue inphase and quadrature components at a baseband frequency; and
an analog-digital converter (26) for digitizing the uplink receive signal.

9. The apparatus (20) of claim 8, wherein the means for demodulating (24) is adapted to adjust a signal level of the uplink receive signal based on the time between a first edge of the modulated signal and a subsequent second edge of the modulated signal.

10. The apparatus (20) of claim 8, wherein the means for demodulating (24) is adapted to demodulate the modulated signal according to a pulse-width demodulation.

11. The apparatus (20) of claim 8, wherein the means (22) for receiving is further adapted for converting a received optical modulated signal to the modulated electrical signal.

12. A base station transceiver comprising the remote unit apparatus (10) of claim 1 and the central unit apparatus (20) of claim 8.

13. A method for a remote unit (100) of a base station transceiver (300) in a mobile communication system, the base station transceiver (300) comprising a central unit (200) and the remote unit (100), the method comprising
obtaining (102) an uplink receive signal, comprising amplifying a filtered radio signal from a receive antenna and a down converting the signal to a base band frequency to obtain the uplink receive signal, wherein the uplink receive signal comprises analogue inphase and quadrature components at a baseband frequency,
modulating (104) the uplink receive signal into a modulated signal, the modulated signal changing between at least two signal levels, the modulated signal comprising rising and falling edges between the at least two signal levels, wherein a time between the rising and falling edges comprises information on the uplink receive signal; and
providing (106) the modulated signal to the central unit (200).

14. A method for a central unit (200) of a base station transceiver (300) in a mobile communication system, the base station transceiver (300) comprising the central unit (200) and a remote unit (100), the method comprising
receiving a modulated signal from the remote unit (100);
demodulating the modulated signal into an uplink receive signal, the modulated signal changing between at least two signal levels, the modulated signal comprising rising and falling edges between the at least two signal levels, wherein a time between the rising and falling edges comprises information on the uplink receive signal, wherein the uplink receive signal comprises analogue inphase and quadrature components at a baseband frequency; and
analog-digital converting for digitizing the uplink receive signal.

15. A computer program having a program code for performing one of the methods of claims 13 or 14, when the computer program is executed on a computer or processor.

## Patentansprüche

1. Vorrichtung (10) für eine Ferneinheit (100) eines Basisstations-Transceivers (300) in einem mobilen Kommunikationssystem, wobei der Basisstations-Transceiver (300) eine Zentraleinheit (200) und die Ferneinheit (100) umfasst, wobei die Ferneinheitsvorrichtung (10) umfasst:
Mittel zum Erhalten (12) eines Uplink-Empfangssignals, umfassend einen rauscharmen Verstärker zum Verstärken eines gefilterten Funksignals von einer Empfangsantenne, und einen Mischer zum Herunterkonvertieren des Signals von dem rauscharmen Verstärker auf eine Basisbandfrequenz, um ein Uplink-Empfangssignal zu erhalten, wobei das Uplink-Empfangssignal analoge phasengleiche und Quadraturphasen-Komponenten bei einer Basisbandfrequenz umfasst;
Mittel zum Modulieren (14) des Uplink-Empfangssignals in ein moduliertes Signal, wobei sich das modulierte Signal zwischen mindestens zwei Signalpegeln verändert, wobei das modulierte Signal ansteigende und fallende Flanken zwischen den mindestens zwei Signalpegeln umfasst, wobei eine Zeitspanne zwischen den ansteigenden und fallenden Flanken Informationen über das Uplink-Empfangssignal signalisiert; und
Mittel zum Bereitstellen (16) des modulierten Signals an die Zentraleinheit (200).

2. Vorrichtung (10) nach Anspruch 1, wobei das Mittel zum Modulieren (14) dazu ausgelegt ist, die Zeitspanne zwischen einer ersten Flanke des modulierten Signals und einer nachfolgenden zweiten Flanke des modulierten Signals derart anzupassen, dass die Zeitspanne einen Pegel des Uplink-Empfangssignals darstellt, wobei das Mittel zum Modulieren (14) dazu ausgelegt ist, das Uplink-Empfangssignal entsprechend einem Ein-Ausschalten oder einem Amplituden-Shift-Keying-Signal zu modulieren, um das modulierte Signal zu erhalten; und/oder wobei das Mittel zum Modulieren (14) dazu ausgelegt ist, das Uplink-Empfangssignal gemäß einer Pulsweitenmodulation oder gemäß einer Delta-Sigma-Modulation zu modulieren.

3. Vorrichtung (10) nach Anspruch 1, wobei das Mittel zum Modulieren (14) dazu ausgelegt ist, das Uplink-Empfangssignal weiterhin auf der Basis eines abstimmbaren Taktsignals oder Referenzsignals zu konvertieren, wobei die Vorrichtung (10) weiterhin Mittel zum Erzeugen des abstimmbaren Taktsignals oder Referenzsignals umfasst, oder wobei die Vorrichtung (10) weiterhin Mittel zum Empfangen des abstimmbaren Taktsignals oder des Referenzsignals von der Zentraleinheit (200) umfasst.

4. Vorrichtung (10) nach Anspruch 1, wobei das Uplink-Empfangssignal im Basisband durch zwei reell bewertete Signale dargestellt wird.

5. Vorrichtung (10) nach Anspruch 1, wobei der Mischer dazu ausgelegt ist, das Signal von dem rauscharmen Verstärker auf der Basis eines Mischersignals herunterzukonvertieren, wobei die Vorrichtung (10) weiterhin Mittel zum Erzeugen des Mischersignals und/oder Mittel zum Empfangen des Mischersignals von der Zentraleinheit (200) umfasst, oder wobei das Uplink-Empfangssignal einem komplex bewerteten Signal entspricht, und wobei der Mischer dazu ausgelegt ist, das Herunterkonvertieren auf der Basis des Mischersignals und einer verschobenen Version des Mischersignals durchzuführen, wobei eine Phasenverschiebung zwischen dem Mischersignal und der verschobenen Version des Mischersignals 90° oder π/2 entspricht.

6. Vorrichtung (10) nach Anspruch 5, wobei die Vorrichtung (10) Mittel zum Empfangen eines optischen Mischersignals von der Zentraleinheit (200) umfasst, wobei das Mittel zum Empfangen weiterhin dazu ausgelegt ist, das optische Mischersignal in ein elektrisches Mischersignal zur Bereitstellung an den Mischer (12c) zu konvertieren.

7. Vorrichtung (10) nach Anspruch 1, wobei das Mittel zum Bereitstellen (16) weiterhin dazu ausgelegt ist, das modulierte Signal in ein optisches moduliertes Signal zur Bereitstellung an die Zentraleinheit (200) ausgelegt ist.

8. Vorrichtung (20) für eine Zentraleinheit (200) eines Basisstations-Transceivers (300) in einem mobilen Kommunikationssystem, wobei der Basisstations-Transceiver (300) die Zentraleinheit (200) und eine Ferneinheit (100) umfasst, wobei die Zentraleinheits-Vorrichtung (20) umfasst:
Mittel zum Empfangen (22) eines modulierten Signals von der Ferneinheit (100);
Mittel zum Demodulieren (24) des modulierten Signals in ein Uplink-Empfangssignal, wobei sich das modulierte Signal zwischen mindestens zwei Signalpegeln verändert, wobei das modulierte Signal ansteigende und fallende Flanken zwischen den mindestens zwei Signalpegeln umfasst, wobei eine Zeitspanne zwischen den ansteigenden und fallenden Flanken Informationen über das Uplink-Empfangssignal signalisiert, wobei das Uplink-Empfangssignal analoge phasengleiche und Quadraturphasen-Komponenten bei einer Basisbandfrequenz umfasst; und
einen Analog-Digital-Wandler (26) zum Digitalisieren des Uplink-Empfangssignals.

9. Vorrichtung (20) nach Anspruch 8, wobei das Mittel zum Demoduüeren (24) dazu ausgelegt ist, einen Signalpegel des Uplink-Empfangssignals auf der Basis der Zeitspanne zwischen einer ersten Flanke des modulierten Signals und einer nachfolgenden zweiten Flanke des modulierten Signals anzupassen.

10. Vorrichtung (20) nach Anspruch 8, wobei das Mittel zum Demoduüeren (24) dazu ausgelegt ist, das modulierte Signal gemäß einer Pulsweitenmodulation zu demodulieren.

11. Vorrichtung (20) nach Anspruch 8, wobei das Mittel (22) zum Empfangen weiterhin dazu ausgelegt ist, ein empfangenes optisches moduliertes Signal in das modulierte elektrische Signal zu konvertieren.

12. Basisstations-Transceiver, umfassend die Ferneinheitsvorrichtung (10) gemäß Anspruch 1 und die Zentraleinheitsvorrichtung (20) gemäß Anspruch 8.

13. Verfahren für eine Ferneinheit (100) eines Basisstations-Transceivers (300) in einem mobilen Kommunikationssystem, wobei der Basisstations-Transceiver (300) eine Zentraleinheit (200) und die Ferneinheit (100) umfasst, wobei das Verfahren umfasst:
Erhalten (102) eines Uplink-Empfangssignals, umfassend das Verstärken eines gefilterten Funksignals von einer Empfangsantenne und das Herunterkonvertieren des Signals auf eine Basisbandfrequenz, um ein Uplink-Empfangssignal zu erhalten, wobei das Uplink-Empfangssignal analoge phasengleiche und Quadraturphasen-Komponenten bei einer Basisbandfrequenz umfasst;
Modulieren (104) des Uplink-Empfangssignals in ein moduliertes Signal, wobei sich das modulierte Signal zwischen mindestens zwei Signalpegeln verändert, wobei das modulierte Signal ansteigende und fallende Flanken zwischen den mindestens zwei Signalpegeln umfasst, wobei eine Zeitspanne zwischen den ansteigenden und fallenden Flanken Informationen über das Uplink-Empfangssignal umfasst; und
Bereitstellen (106) des modulierten Signals an die Zentraleinheit (200).

14. Verfahren für eine Zentraleinheit (200) eines Basisstations-Transceivers (300) in einem mobilen Kommunikationssystem, wobei der Basisstations-Transceiver (300) die Zentraleinheit (200) und eine Ferneinheit (100) umfasst, wobei das Verfahren umfasst:
Empfangen eines modulierten Signals von der Ferneinheit (100);
Demodulieren des modulierten Signals in ein Uplink-Empfangssignal, wobei sich das modulierte Signal zwischen mindestens zwei Signalpegeln verändert, wobei das modulierte Signal ansteigende und fallende Flanken zwischen den mindestens zwei Signalpegeln umfasst, wobei eine Zeitspanne zwischen den ansteigenden und fallenden Flanken Informationen über das Uplink-Empfangssignal umfasst, wobei das Uplink-Empfangssignal analoge phasengleiche und Quadraturphasen-Komponenten bei einer Basisbandfrequenz umfasst; und
Analog-digital-Umwandeln zum Digitalisieren des Uplink-Empfangssignals.

15. Computerprogramm mit einem Programmcode zum Durchführen eines der Verfahren der Ansprüche 13 oder 14, wenn das Computerprogramm auf einem Computer oder Prozessor ausgeführt wird.

## Revendications

1. Appareil (10) pour une unité distante (100) d'un émetteur-récepteur de station de base (300) dans un système de communication mobile, l'émetteur-récepteur de station de base (300) comprenant une unité centrale (200) et l'unité distante (100), l'appareil d'unité distante (10) comprenant
des moyens pour obtenir (12) un signal de réception de liaison montante comprenant un amplificateur à faible bruit pour amplifier un signal radio filtré provenant d'une antenne de réception et un mélangeur pour abaisser la fréquence du signal provenant de l'amplificateur à faible bruit jusqu'à une fréquence de la bande de base afin d'obtenir le signal de réception de liaison montante, dans lequel le signal de réception de liaison montante comprend des composantes en phase et en quadrature analogiques à une fréquence de la bande de base ;
des moyens pour moduler (14) le signal de réception de liaison montante en un signal modulé, le signal modulé changeant entre au moins deux niveaux de signal, le signal modulé comprenant des fronts de montée et de descente entre les au moins deux niveaux de signal, dans lequel une durée entre les fronts de montée et de descente signale des informations sur le signal de réception de liaison montante ; et
des moyens pour délivrer (16) le signal modulé à l'unité centrale (200).

2. Appareil (10) selon la revendication 1, dans lequel les moyens pour moduler (14) sont adaptés pour régler la durée entre un premier front du signal modulé et un deuxième front ultérieur du signal modulé de sorte que la durée représente un niveau du signal de réception de liaison montante, dans lequel les moyens pour moduler (14) sont adaptés pour moduler le signal de réception de liaison montante correspondant à un signal de modulation tout ou rien ou de modulation par déplacement d'amplitude afin d'obtenir le signal modulé ; et/ou dans lequel les moyens pour moduler (14) sont adaptés pour moduler le signal de réception de liaison montante conformément à une modulation de largeur d'impulsion ou conformément à une modulation delta-sigma.

3. Appareil (10) selon la revendication 1, dans lequel les moyens pour moduler (14) sont adaptés en outre pour convertir le signal de réception de liaison montante en fonction d'un signal d'horloge accordable ou d'un signal de référence, dans lequel l'appareil (10) comprend en outre des moyens pour générer le signal d'horloge accordable ou le signal de référence ou dans lequel l'appareil (10) comprend en outre des moyens pour recevoir le signal d'horloge accordable ou le signal de référence provenant de l'unité centrale (200).

4. Appareil (10) selon la revendication 1, dans lequel le signal de réception de liaison montante dans la bande de base est représenté par deux signaux à valeurs réelles.

5. Appareil (10) selon la revendication 1, dans lequel le mélangeur est adapté pour abaisser la fréquence du signal provenant de l'amplificateur à faible bruit en fonction d'un signal de mélangeur, dans lequel l'appareil (10) comprend en outre des moyens pour générer le signal de mélangeur et/ou des moyens pour recevoir le signal de mélangeur provenant de l'unité centrale (200) ou dans lequel le signal de réception de liaison montante correspond à un signal à valeurs complexes, et dans lequel le mélangeur est adapté à l'abaissement de la fréquence en fonction du signal de mélangeur et d'une version déphasée du signal de mélangeur, dans lequel un déphasage entre le signal de mélangeur et la version déphasée du signal de mélangeur correspond à 90° degrés ou π/2.

6. Appareil (10) selon la revendication 5, dans lequel l'appareil (10) comprend des moyens pour recevoir un signal optique de mélangeur provenant de l'unité centrale (200), dans lequel les moyens pour recevoir sont en outre adaptés pour convertir le signal optique de mélangeur en un signal électrique de mélangeur à délivrer au mélangeur (12c).

7. Appareil (10) selon la revendication 1, dans lequel les moyens à délivrer (16) sont en outre adaptés pour convertir le signal modulé en un signal optique modulé à délivrer à l'unité centrale (200).

8. Appareil (20) pour une unité centrale (200) d'un émetteur-récepteur de station de base (300) dans un système de communication mobile, l'émetteur-récepteur de station de base (300) comprenant l'unité centrale (200) et une unité distante (100), l'appareil d'unité centrale (20) comprenant
des moyens pour recevoir (22) un signal modulé provenant de l'unité distante (100) ;
des moyens pour démoduler (24) le signal modulé en un signal de réception de liaison montante, le signal modulé changeant entre au moins deux niveaux de signal, le signal modulé comprenant des fronts de montée et de descente entre les au moins deux niveaux de signal, dans lequel une durée entre les fronts de montée et de descente signale des informations sur le signal de réception de liaison montante, dans lequel le signal de réception de liaison montante comprend des composantes en phase et en quadrature analogiques à une fréquence de la bande de base ; et un convertisseur analogique-numérique (26) pour numériser le signal de réception de liaison montante.

9. Appareil (20) selon la revendication 8, dans lequel les moyens pour démoduler (24) sont adaptés pour régler un niveau de signal du signal de réception de liaison montante en fonction de la durée entre un premier front du signal modulé et un deuxième front ultérieur du signal modulé.

10. Appareil (20) selon la revendication 8, dans lequel les moyens de démodulation (24) sont adaptés pour démoduler le signal modulé conformément à une démodulation de largeur d'impulsion.

11. Appareil (20) selon la revendication, dans lequel les moyens (22) de réception sont en outre adaptés pour convertir un signal optique modulé reçu en un signal électrique modulé.

12. Émetteur-récepteur de station de base comprenant l'appareil d'unité distante (10) selon la revendication 1 et l'appareil d'unité centrale (20) selon la revendication 8.

13. Procédé pour une unité distante (100) d'un émetteur-récepteur de station de base (300) dans un système de communication mobile, l'émetteur-récepteur de station de base (300) comprenant une unité centrale (200) et l'unité distante (100), le procédé comprenant les étapes suivantes
obtenir (102) un signal de réception de liaison montante, comprenant l'amplification d'un signal radio filtré provenant d'une antenne de réception et l'abaissement de la fréquence du signal jusqu'à une fréquence de la bande de base afin d'obtenir le signal de réception de liaison montante, dans lequel le signal de réception de liaison montante comprend des composantes en phase et en quadrature analogiques à une fréquence de la bande de base,
moduler (104) le signal de réception de liaison montante en un signal modulé, le signal modulé changeant entre au moins deux niveaux de signal, le signal modulé comprenant des fronts de montée et de descente entre les au moins deux niveaux de signal, dans lequel une durée entre les fronts de montée et de descente comprend des informations sur le signal de réception de liaison montante ; et délivrer (106) le signal modulé à l'unité centrale (200).

14. Procédé pour une unité centrale (200) d'un émetteur-récepteur de station de base (300) dans un système de communication mobile, l'émetteur-récepteur de station de base (300) comprenant l'unité centrale (200) et une unité distante (100), le procédé comprenant
la réception d'un signal modulé provenant de l'unité distante (100) ;
la démodulation du signal modulé en un signal de réception de liaison montante, le signal modulé changeant entre au moins deux niveaux de signal, le signal modulé comprenant des fronts de montée et de descente entre les au moins deux niveaux de signal, dans lequel une durée entre les fronts de montée et de descente comprend des informations sur le signal de réception de liaison montante, dans lequel le signal de réception de liaison montante comprend des composantes en phase et en quadrature analogiques à une fréquence de la bande de base ; et
la conversion analogique-numérique pour numériser le signal de réception de liaison montante.

15. Programme informatique possédant un code de programme pour exécuter un des procédés selon la revendication 13 ou 14, lorsque le programme informatique est exécuté sur un ordinateur ou un processeur.
